(19) **Europäisches Patentamt / European Patent Office / Office européen des brevets**

(11) **EP 4 563 268 A1**

(12) **EUROPÄISCHE PATENTANMELDUNG**

(43) Veröffentlichungstag:
04.06.2025 Patentblatt 2025/23

(21) Anmeldenummer: 23213398.3

(22) Anmeldetag: 30.11.2023

(51) Internationale Patentklassifikation (IPC):
$B22F\ 10/28^{(2021.01)}$   $B22F\ 10/38^{(2021.01)}$
$B22F\ 10/85^{(2021.01)}$   $B29C\ 64/153^{(2017.01)}$
$B29C\ 64/393^{(2017.01)}$   $B33Y\ 50/02^{(2015.01)}$
$G06N\ 20/00^{(2019.01)}$   $G05B\ 19/18^{(2006.01)}$

(52) Gemeinsame Patentklassifikation (CPC):
(C-Sets verfügbar)
**B22F 10/38; B22F 10/28; B22F 10/85;
B29C 64/153; B29C 64/393; B33Y 50/02;
G06N 20/00;** B22F 12/90; G05B 19/4099   (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
• **Heinrichsdorff, Frank**
**14513 Teltow (DE)**
• **Kastsian, Darya**
**14612 Falkensee (DE)**
• **Reznik, Daniel**
**13503 Berlin (DE)**
• **Theile, Oliver**
**13437 Berlin (DE)**

(74) Vertreter: **Siemens Patent Attorneys**
**Postfach 22 16 34**
**80506 München (DE)**

(54) **VERFAHREN ZUM ERMITTELN EINER BAUTEILQUALITÄT EINES DURCH PULVERBETTBASIERTES SCHMELZEN HERZUSTELLENDEN BAUTEILS**

(57)   Die Erfindung betrifft ein Verfahren zum Ermitteln einer Bauteilqualität eines durch pulverbettbasiertes Schmelzen herzustellenden Bauteils (10), welches aus mehreren aufeinanderfolgenden Schichten (12) gebildet wird.

FIG 1

EP 4 563 268 A1

(52)  Gemeinsame Patentklassifikation (CPC): (Forts.)

C-Sets
B22F 2999/00, B22F 10/85, B22F 12/90,
B22F 10/366, B22F 2203/03, B22F 10/38

**Beschreibung**

Die Erfindung betrifft ein Verfahren zum Ermitteln einer Bauteilqualität eines durch pulverbettbasiertes Schmelzen herzustellenden Bauteils gemäß dem Patentanspruch 1.

Zur Qualitätssicherung von durch additives Laser-Pulverbettverfahren (englisch: Laser Powder Bed Fusion, LPBF) hergestellten Bauteilen ist es erforderlich, relevante Anomalien zu identifizieren. Dazu werden in der Regel Emissionsdaten verwendet, die von einer In-situ-Schmelzbadüberwachung (englisch: Melt Pool Monitoring oder kurz MPM) oder durch eine optische Tomographie (OT) gesammelt werden. Die gesammelten Daten werden in der Regel so verarbeitet, dass Rückschlüsse auf Anomalien während eines LPBF-Prozesses gezogen werden können. So kann anhand der gemessenen Emissionsintensitätsdaten auf das Vorhandensein beispielsweise von lokalen Überhitzungen geschlossen werden.

In ähnlicher Art lassen sich simulierte Verteilungen von Prozesstemperaturen bewerten, um schon vor dem Start eines Bauprozesses zu erwartende Prozessprobleme zu erkennen und gegebenenfalls Parameter eines Werkzeugpfads beziehungsweise Laserpfads anzupassen.

Das Schmelzbad beschreibt zumindest den Bereich im Pulverbett in dem mittels beispielsweise eines Lasers das Pulver zur Schicht geschmolzen wird.

Dabei ist eine gängige Methode zur Erkennung von Anomalien, einen Schwellwert für Überwachungssignale festzulegen und die von diesem Schwellwert abweichenden Werte als Anomalie zu kennzeichnen.

Für die Bewertung einer Anomalie beziehungsweise Prozessanomalie oder einer vorhergesagten lokalen Überhitzung aufgrund der Simulation ist ein Problem, dass nicht alle für eine Lage beziehungsweise Schicht erkannten kritischen Regionen zur Störung des Produktionsprozesses des herzustellenden Bauteils, insbesondere bis hin zu Prozessabbrüchen, führen. Typischerweise werden auf Basis von Einzellagen zu viele vermeintliche Prozessprobleme identifiziert und entsprechend zu viele falsche Alarme ausgelöst. Werden für den Fall der Prozesssimulation die Jobdaten auf Basis der erkannten Alarme korrigiert, kann diese Fehlerkennung zu unnötigen Korrekturen und damit beispielsweise zu unnötigen Prozesspausen und so zu einer verlängerten Bauzeit des Bauteils führen.

Alternativ ist eine fortschrittliche Methode zur Verarbeitung von In-situ-Überwachungsdaten der Einsatz von Techniken des maschinellen Lernens. Grundsätzlich bieten Algorithmen des maschinellen Lerners zur Erkennung von Anomalien bei LPBF-Prozessen den Vorteil einer besonders automatisierbaren Merkmalserkennung. So kann Machine-Learning dabei helfen, Muster und Unregelmäßigkeiten in komplexen LPBF-Prozessen zu erkennen, wobei dafür eine große Menge an Überwachungsdaten gesammelt und vorbereitet werden muss, um einen Machine-Learning-Algorithmus zu trainieren. Das Sammeln ausreichender Daten mit den richtigen Zielmerkmalen ist entscheidend für die Qualität und eine Genauigkeit einer Machine-Learning-Modell-Vorhersage, da der Algorithmus nur Muster findet, deren Eingangsdatenmerkmale abgedeckt sind.

Heutzutage werden Trainingsdaten anhand von Standardgeometrien, wie Würfeln, Stäben oder Zylinder gesammelt, wobei Prozessparameter, wie Laserleistung, Lasergeschwindigkeit und Schraffurabstand, variiert werden können. Anhand solcher Parametervariationen und gesammelter Daten werden Rückschlüsse auf die Porosität oder Rissverteilung eines ausgewählten Prozesses zur Herstellung eines Bauteils gezogen.

Bei der Bewertung von Schwellwerten insbesondere von Monitoring oder Simulationsdaten erfolgt das Anwenden des Schwellwerts auf Daten einer Lage zur Erkennung kritischer Regionen. Anhand einer Größenschwelle können anschließend als zu klein bewertete Regionen ausgefiltert werden, sodass nur kritische Regionen oberhalb einer Schwellgröße als relevant markiert werden. So kann zumindest ein Teil an falsch positiven Ergebnissen eingedämmt werden.

Es zeigt Goh, G.D., Sing, S.L. & Yeong, W.Y. A review on machine learning in 3D printing: applications, potential, and challenges. Artif Intell Rev 54, 63-94 (2021) einen Überblick über maschinelles Lernen im 3D-Druck. Ferner zeigt Felix, S., Ray Majumder, S., Mathews, H.K. et al. In situ process quality monitoring and defect detection for direct metal laser melting. Sci Rep 12, 8503 (2022) in-situ Prozessqualitätsüberwachung und Fehlerdetektion beim direkten Metalllaserschmelzen.

Aufgabe der vorliegenden Erfindung ist es, ein Verfahren bereitzustellen, durch welches auf besonders vorteilhafte Weise eine Bauteilqualität ermittelt oder insbesondere vorhergesagt wird, vor oder während des Herstellens eines Bauteils mittels pulverbettbasierten Schmelzens, und dabei besonders effiziente Trainingsdaten verwendet werden und/oder auf vorteilhafte Weise für die Bauteilqualität nicht relevante Anomalien vernachlässigt werden können.

Diese Aufgabe wird erfindungsgemäß durch die Gegenstände der unabhängigen Patentansprüche gelöst. Vorteilhafte Ausgestaltungen und Weiterbildungen sowie zugehörige Vorteile der Erfindung sind in den abhängigen Patentansprüchen, in der Beschreibung und in der Zeichnung angegeben.

Ein erster Aspekt der Erfindung betrifft ein Verfahren zum Ermitteln einer Bauteilqualität eines durch pulverbettbasiertes Schmelzen herzustellenden Bauteils, welches aus mehreren aufeinanderfolgenden Schichten beziehungsweise Lagen herstellbar ist oder gebildet wird. Bei dem erfindungsgemäßen Verfahren wird in Abhängigkeit von wenigstens einem Datensatz und/oder in Abhängigkeit von einem Modellierungsmodell, welche, also der Datensatz und das Modell, anhand von Schichtdaten einer jeweiligen Schicht zumindest eines Teils der aufeinanderfolgenden Schichten des Bauteils und/oder eines Modellbauteils gebildet, beziehungsweis dienen die Schichtdaten als Eingabe.

Das pulverbettbasierte Schmelzen ist ein additives Fertigungsverfahren, bei dem Material oder Werkstoff Schicht für Schicht zusammengefügt wird, um Werkstücke beziehungsweise das Bauteil aus 3D-Modelldaten zu erzeugen oder generieren. Bei dem pulverbettbasierten Schmelzen werden mittels thermischer Energie selektive Regionen des Pulverbetts insbesondere mittels eines Laserstrahls verbunden beziehungsweise verschmolzen. Der verwendete Werkstoff für das Bauteil ist insbesondere Metall und/oder Kunststoff. Dabei bildet das Pulverbett selbst beziehungsweise das Pulver in der Regel einen guten thermischen Isolator. Der Datensatz enthält insbesondere Informationen über die Kritikalität beziehungsweise Anomalien mehrerer zusammengefasster Schichten. Das Modellierungsmodell basiert insbesondere auf einer Methode des maschinellen Lernens und kann anhand beispielsweise des 3D-Modells des herzustellenden Bauteils Vorhersagen über auftretende Anomalien treffen. Die Schichtdaten können insbesondere aus Messungen wie dem Melt Pool Monitoring (MPM) oder der optischen Tomographie (OT) gewonnen werden. Zusätzlich oder alternativ können die Schichtdaten mittels einer Simulation des Schmelzprozesses gewonnen beziehungsweise erzeugt werden. Das Modellbauteil kann eine von dem Bauteil abweichende Form aufweisen, aber auch das Bauteil selbst sein und dient dazu, Schichtdaten beruhend auf Messungen zu erfassen.

Mit anderen Worten wird bei dem erfindungsgemäßen Verfahren zum Bestimmen der Bauteilqualität ein Datensatz verwendet, welcher Informationen mehrerer aufeinanderfolgender Schichten, welche zum Erzeugen des Bauteils mittels Schmelzens herzustellen sind, zusammengefasst werden, um Aussagen über eine Kritikalität beziehungsweise auftretende Anomalien beim Herstellungsprozess zu treffen. Dabei können die Schichtdaten, welche dem Datensatz zugrunde liegen, sowohl simuliert als auch gemessen sein. Alternativ wird bei dem erfindungsgemäßen Verfahren zum Vorhersagen beziehungsweise zum Ermitteln der Bauteilqualität anhand der Schichtdaten ein Modellierungsmodell bemüht, welches anhand der Schichtdaten die Bauteilqualität abschätzen kann, wobei das Modellierungsmodell insbesondere auf Methoden des maschinellen Lernens zurückgreift.

So ist ein Vorteil des Verfahrens, insbesondere im Gegensatz zu existierenden Lösungen, dass für die Bewertung einer Relevanz einer kritischen Region oder für die Identifikation kritischer Vektoren, insbesondere Belichtungsvektoren, die Schichtdaten mehrerer aufeinanderfolgender Schichten genutzt werden. Dadurch ist ein weiterer Vorteil, dass sich insbesondere Überhitzungen, die zu Aufwölbungen der Oberfläche und insbesondere zu sogenannten Schmelzperlen führen, besonders zuverlässig detektieren lassen.

Ein weiterer Vorteil ist, dass das Machine-Learning-Modell besonders kompakt sein kann und nur wenig experimentelle Trainingsaufbauten benötigt und dabei trotzdem besonders präzise Ergebnisse ermöglicht werden können.

In vorteilhafter Ausgestaltung der Erfindung werden für die Schichtdaten der jeweiligen Schicht beim Herstellen des Modellbauteils oder des Bauteils, wobei das Modellbauteil das Bauteil selbst sein kann, mittels einer Sensoreinrichtung für die jeweilige Schicht Messdaten aufgezeichnet und/oder die Schichtdaten werden durch eine Simulation berechnet. Mit anderen Worten ist eine wenigstens einen Sensor umfassende Sensoreinrichtung vorgesehen, welche insbesondere während des Herstellens des Bauteils beziehungsweise Modellbauteils Daten aufzeichnet, wobei durch die Sensoreinrichtung erzeugten Sensordaten beispielsweise Emissionsintensitätsdaten oder Langzeitbelichtungen einer Kamera umfassen können. Alternativ werden die Schichtdaten insbesondere über simulierte Verteilungen simuliert. Aus den Messdaten beziehungsweise aus der Simulation werden dann die Schichtdaten abgeleitet. Dadurch ergibt sich der Vorteil, dass beispielsweise auf besonders präzise Weise Schichtdaten gebildet werden können, da diesen Messdaten oder Simulationsdaten zugrunde gelegt werden.

In weiterer vorteilhafter Ausgestaltung der Erfindung wird für das Modellbauteil ein Bauteilmodell beziehungsweise ein 3D-Modell verwendet, dessen Geometrie oder Form für mehrere Belichtungsvektoren, welche bei der Herstellung des Modellbauteils verwendbar sind beziehungsweise verwendet werden, jeweils unterschiedliche Eigenschaften vorgibt, sodass eine Variation der Eigenschaften bei den mehreren Belichtungsvektoren vorliegt. Dabei können die Eigenschaften insbesondere eine Position, eine Vektorlänge, ein Minimales-Massenintegral, eine Vektororientierung oder weitere Merkmale umfassen. Mit anderen Worten wird das Modellbauteil auf Grundlage eines dreidimensionalen Modells - dem Bauteilmodell - vorgegeben, wobei die Geometrie beziehungsweise die Form des Bauteilmodells so gewählt wird, dass insbesondere für unterschiedliche Schichten sich deren Belichtungsvektoren, welche die Bewegung des Lasers in der Schicht im Pulverbett vorgeben, unterscheiden. So kann beispielsweise eine Schicht des Bauteils außenumfangsseitig durch eine Dreiecksform begrenzt werden, so können die Vektorlänge innerhalb der zu bildenden Schicht des Belichtungsvektors variiert werden. Zum Beispiel ist es von Vorteil, wenn unterschiedliche Eigenschaften variiert werden.

Eine Eigenschaft des Vektors kann die Position sein, insbesondere die Position auf der Bauplatte und somit xy-Koordinaten der Mitte des Belichtungsvektors umfassen. Eine zweite Eigenschaft kann die Vektorlänge sein. Alternativ kann die Vektorzeit eine Eigenschaft sein. Eine weitere Eigenschaft ist das minimale Massenintegral beziehungsweise ein durchschnittliches Massenintegral, welches die maximale oder durchschnittliche Vektortemperatur, welche durch Simulation oder durch halbanalytischen Ansatz ermittelt werden kann. Dabei bestimmt das Masseintegral, wie viel von einer Halbkugel oder Ellipse mit einem bestimmten Radius, typischerweise 1 mm, in einem Teil eingeschlossen ist. Um das minimale Masseintegral zu ermitteln, können beispielsweise auf einem Belichtungsvektor Prüfpunkte mit einem regelmäßigen Abstand von typischerweise 0,1 mm abgetastet werden. Für solche Stichproben können Masseintegrale ausgewertet und ihr Minimum berechnet werden. Dabei hängt das Masseintegral von der Umgebung des Belichtungspunkts ab, insbesondere ob viel geschmolzenes Material ihn umgibt oder viel Pulver, da das Pulver im Vergleich zu dem geschmolzenem Material ein guter thermischer Isolator ist, und somit zu einer lokalen Überhitzung führen kann. Eine weitere Eigenschaft kann die Vektororientierung sein. Zusätzlich optionale Merkmale können beispielsweise Prozessparameter wie Laserleistung, Lasergeschwindigkeit, Schraffurabstand und so weiter sein, welche ebenfalls berücksichtigt werden können. Durch die Generierung eines Modellbauteils, welche möglichst viele Belichtungsvektoren beziehungsweise eine große Eigenschaftsvariation dieser abdeckt, ergibt sich der Vorteil, dass eine große Spreizung der Modell-Eingangsparameter erzielt wird, um dadurch vorteilhafte Trainingsdaten für das Modellierungsmodell zu erhalten.

In vorteilhafter Ausgestaltung des Verfahrens werden die beim Herstellen des Modellbauteils erfassten Messdaten sowie das Bauteilmodell, das insbesondere auch Informationen über die Belichtungsvektoren beziehungsweise eine mögliche Herstellung umfassen kann, als Trainingsdaten und/oder als Validierungsdaten für eine Methode des maschinellen Lernens, welche das Modellierungsmodell bereitstellt beziehungsweise das Modellierungsmodell bildet, verwendet. Mit anderen Worten werden als Trainingsdaten die Daten eines Modellbauteils verwendet, welches eine besondere Geometrie aufweist, um somit eine große Variation an Belichtungsvektoren zu erfassen. Dafür wird dieses Modellbauteil anhand des Bauteilmodells durch pulverbettbasiertes Schmelzen erzeugt und dabei zumindest für einen Teil der Schichten und Schichtdaten anfallende Messungen beziehungsweise Messdaten für die Schichtdaten verwendet. So werden diese Daten und die Informationen des Bauteilmodells zusammengefasst und können als Trainingsdaten verwendet werden. Dabei kann es sich bei der Methode des maschinellen Lernens beziehungsweise dem Modellierungsmodell beispielsweise um einen selbstlernenden Algorithmus und/oder ein neuronales Netz handeln. Dadurch ergibt sich der Vorteil, dass aufgrund der Form des Bauteilmodells und dem Vermessen des durch Vorlage des Bauteilmodells hergestellten Modellbauteils besonders vorteilhafte Messdaten erzeugt werden können und somit die Trainingsdaten besonders vorteilhaft zum Ermitteln der Bauteilqualität verwendet werden können.

In weiterer vorteilhafter Ausgestaltung der Erfindung werden als die Messdaten eine Intensitätsverteilung beziehungsweise Emissionsintensitätsverteilung, welche mittels Schmelzbadüberwachung (englisch: Melt Pool Monitoring, MPM) - insbesondere In-situ-Schmelzbadüberwachung - und/oder Langzeitbelichtungsaufnahmen für eine optische Tomographie ermittelt werden - bezeichnet. Die Langzeitbelichtungsaufnahmen entspricht insbesondere eine Belichtungsaufnahme, welche während dem Bilden pro Schicht beziehungsweise Lage belichtet wird. Mit anderen Worten werden Prozessemissionen des Schmelzbads, insbesondere automatisch, überwacht, wobei wenigstens ein Sensor die Emission des Schmelzbads insbesondere ortsaufgelöst pro Lage oder Schicht erfasst. Ist das Schmelzbad zu kalt oder überhitzt, kann dies somit in den Messdaten erfasst werden. Bei der optischen Tomographie wird insbesondere eine optische Aufnahme, beispielsweise mittels einer Kamera pro Schicht, durch Langzeitbelichtung erfasst, sodass eine Lichtverteilung für das Ensemble der die Schicht bildenden Belichtungsvektoren erfasst werden kann. Beispielsweise mittels eins Tomographiealgorithmus kann ein mehrlagiges Abbild erstellt werden.

Hierdurch ergibt sich der Vorteil, dass die Messdaten besonders vorteilhaft zum Durchführen des Verfahrens verwendet werden können.

In weiterer vorteilhafter Ausgestaltung der Erfindung beschreiben die Schichtdaten eine Kritikalität. Mit anderen Worten werden beispielsweise ein Messergebnis beziehungsweise die Messdaten, wie die Intensitätsverteilung beispielsweise mittels einer Klassifizierung in den Schichtdaten umgedeutet. Mit der Klassifizierung wird die Kritikalität zugeordnet, sodass eine Einschätzung des Risikos einer Anomalie an unterschiedlichen Position der jeweiligen Schicht des Bauteils erfolgen werden kann. So kann beispielsweise ein entsprechender Messpunkt in der jeweiligen Schicht derart klassifiziert werden, dass dieser für das Ausbilden des Bauteils und somit dessen Qualität als beispielsweise unterkritisch, semikritisch oder kritisch beschrieben oder klassifiziert wird. Dadurch ergibt sich der Vorteil, dass die Schichtdaten besonders vorteilhaft zum Ermitteln der Bauteilqualität verwendet werden können.

In weiterer vorteilhafter Ausgestaltung der Erfindung werden für die Schichtdaten mehrere, insbesondere bis zu 10 und bevorzugt 3 bis 5 Schichten, arithmetisch und/oder logisch zusammengefasst und daraus wenigstens eine Anomalie für das Bauteil abgeleitet. Die Anomalie kann die Bauteilqualität beschreiben. Mit anderen Worten werden Informationen mehrerer Schichten entweder arithmetisch, das heißt beispielsweise über statistische Verfahren, wie Mittelwert, und/oder logisch, beispielsweise anhand der Kritikalität, zusammengefasst. Liegt beispielsweise bei drei aufeinanderfolgenden Schichten nur in einer Schicht an einer xy-Koordinate eine besonders hohe Intensität an und bei den beiden anderen Schichten ist an derselben xy-Koordinate eine normale Intensität vorzufinden, kann das durch das arithmetische Mittel beispielsweise an dieser Stelle darauf geschlossen werden, dass keine relevante Anomalie vorliegt. Ähnliches gilt für die logische Zusammenfassung, wobei, wenn beispielsweise bei drei Schichten mit derselben xy-Koordinate nur einmal kritisch und zweimal unterkritisch angezeigt wird, ebenso auf das Nichtvorhandensein einer Anomalie geschlossen werden kann. Dadurch ergibt sich der Vorteil, dass das Verfahren zum Ermitteln der Bauteilqualität besonders stabil durchgeführt werden kann.

In weiterer vorteilhafter Ausgestaltung der Erfindung werden aus den Schichtdaten kritische Regionen anhand von Punktdaten und/oder kritische Vektoren anhand von Punktdaten und/oder kritische Vektoren anhand einer Vektor-Kritikalität gebildet und die Bauteilqualität daraus abgeleitet. Mit anderen Worten wird in den mehreren Lagen beziehungsweise Schichten eine kritische Region aus Punktdaten, welche entlang eines jeweiligen Belichtungsvektors verteilt sind, gebildet, wobei Einzellagen-Kritikalitäts-Bitmaps erstellt werden können. Zusätzlich oder alternativ können bei mehreren Lagen kritische Regionen bestimmt werden, indem eine Kontursuche ausbleibt, jedoch für die Belichtungsvektoren einer Lage der Überlapp mit den kritischen Regionen berechnet und die Vektoren beziehungsweise Belichtungsvektoren für den Fall ihrer Überlapp-Schwellwertüberschreitung als kritisch markiert werden. Zusätzlich oder alternativ werden Einzellagen-Vektor-Kritikalitäts-Indizes erstellt, wobei Pixelwerte von Einzellagen-Bitmaps entlang des Vektors erstellt werden können. Dadurch ergibt sich der Vorteil, dass unterschiedliche Fragestellungen bezüglich der ausgebildeten Schichten beantwortet werden können, beispielsweise ob Regionen oder Vektoren beziehungsweise Belichtungsvektoren kritisch sind. Dadurch kann das Verfahren besonders vorteilhaft zur Bestimmung der Bauteilqualität verwendet werden.

In weiterer vorteilhafter Ausgestaltung der Erfindung wird für die Trainingsdaten das Modellbauteil mehrmals, in insbesondere unterschiedlicher Orientierung bauraumfüllend hergestellt. Mit anderen Worten werden mehrere Varianten des Bauteilmodells in dem zur Verfügung stehenden Pulverbett derart angeordnet, dass diese einzeln und freistehend gedruckt werden und dabei jedoch den Bauraum beziehungsweise das Pulverbett möglichst vollständig ausfüllen. So können bei entsprechender optischer Tomographie oder In-situ-Schmelzbettüberwachung für viele Positionen und viele Vektoren beziehungsweise Belichtungsvektoren Messdaten erfasst werden, sodass das Modell beziehungsweise das Modellierungsmodell besonders vorteilhaft trainiert werden kann. Dadurch ergibt sich der Vorteil, dass mittels des maschinellen Lernens besonders vorteilhaft die Bauteilqualität abgeschätzt werden kann.

In weiterer vorteilhafter Ausgestaltung der Erfindung verwendet das Bauteilmodell Skalierungsfaktoren. Mit anderen Worten wird das Bauteilmodell dergestalt bereitgestellt, dass unterschiedliche Schichten beziehungsweise Lagen unterschiedlich skaliert werden, obwohl sie im Wesentlichen die gleiche Form aufweisen. So können beispielsweise an Kanten besonders für die Massenindizes interessante Formen erzeugt werden, für welche somit auf besonders vorteilhafte Weise beim Herstellen des Modellbauteils Messdaten erhalten werden können, um auf besonders vorteilhafte Weise Vorhersagen über die Bauteilqualität zu ermöglichen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Es zeigt:

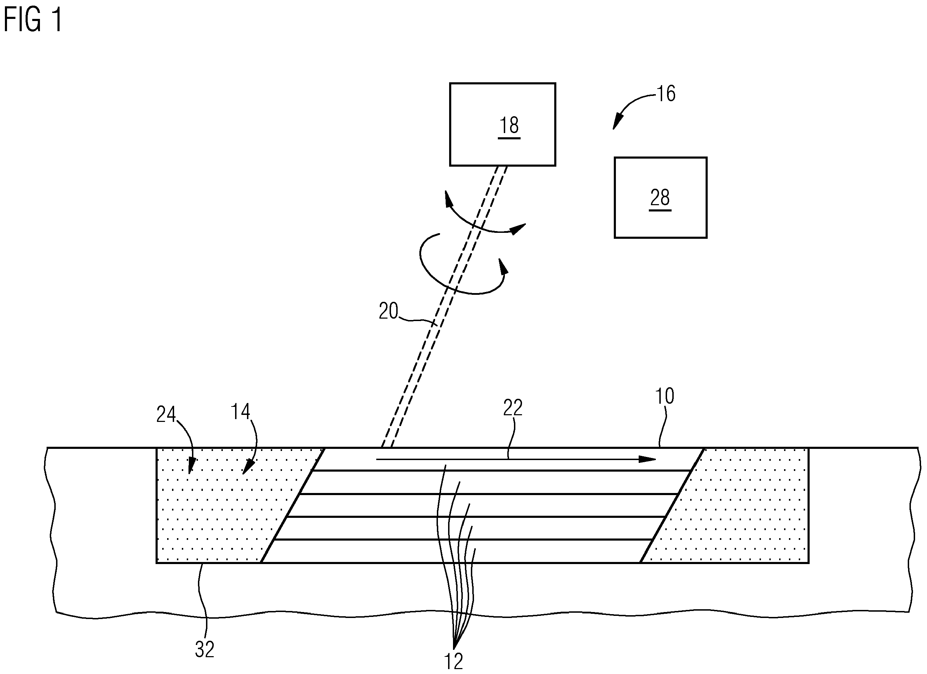

FIG 1    schematische Seitenansicht einer Vorrichtung zum pulverbettbasierten Schmelzen für die Herstellung eines Bauteils;

FIG 2    schematische Perspektivansicht eines Bauteilmodells, welches als Modellbauteil durch das Verfahren herstellbar ist;

FIG 3    perspektivische Ansicht eines Pulverbetts der Vorrichtung mit mehreren Kopien des Bauteilmodels gemäß FIG 2 angeordnet in dem Pulverbett der Vorrichtung gemäß FIG 1;

FIG 4    Draufsichten zwei Schichten mit zugehörigen Belichtungsvektoren des Bauteils gemäß FIG 2;

FIG 5    Draufsicht einer Schicht eines weiteren Bauteilmodels; und

FIG 6    perspektivische Ansicht eines Bauteilmodells, welches eine Schicht gemäß FIG 5 aufweist.

Anhand der Figuren soll ein Verfahren zum Ermitteln beziehungsweise Beurteilen einer Bauteilqualität eines durch Pulverbett basiertes Schmelzen herzustellenden Bauteils 10, welches aus mehreren aufeinanderfolgenden Schichten 12 herstellbar ist beziehungsweise gebildet wird, vorgestellt werden.

Zum Herstellen des Bauteils 10 wird eine ein Pulverbett 14 aufweisende Vorrichtung 16 verwendet, welche eine Lichtquelle 18 aufweist, welche insbesondere einen Laserstrahl 20 bereitstellen kann, der entlang eines Belichtungsvektors 22 verfahren wird, um das in dem Pulverbett 14 enthaltene Pulver 24 selektiv an einer bestimmten Position in dem Pulverbett 14 aufzuschmelzen, wodurch nachdem der Laserstrahl 20 den Belichtungsvektors 22 abgefahren hat jeweils eine Schicht 12 beziehungsweise Lage des Bauteils oder eines Modellbauteils 26 erzeugt oder gebildet wird. Für eine weitere Schicht 12 wird dann die Bauplattform mit dem bereits hergestellten Teil des Bauteils 10 abgesenkt und darauf mit neuem Pulver 24 eine neue Schicht appliziert beziehungsweise geschmolzen. Den Boden des Pulverbetts kann insbesondere eine Bauplatte 32 bilden.

Das Pulver 24 kann insbesondere ein metallischer Werkstoff und/oder Kunststoff sein, wobei dieser mit weiteren Materialen, wie beispielsweise einer Keramik gemischt, sein kann.

Bei dem Verfahren zur Bestimmung der Bauteilqualität des Bauteils 10 wird die Bauteilqualität in Abhängigkeit von wenigstens einem Datensatz und/oder in Abhängigkeit von einem Modellierungsmodell ermittelt, welche anhand von Schichtdaten einer jeweilige Schicht 12 zumindest eines Teils der aufeinanderfolgenden Schichten 12 des Bauteils 10 und/oder des Modellbauteils 26 gebildet werden.

Mit anderen Worten wird der Datensatz insbesondere durch die Schichtdaten bereitgestellt. Zusätzlich oder alternativ können die Schichtdaten als Eingabe für das Modellierungsmodell, welches insbesondere mittels einer Methode des maschinellen Lernens, wie beispielsweise einem selbstlernenden Algorithmus und/oder einem neuronalen Netz bereitgestellt wird, verwendet werden, wobei zusätzlich Schichtdaten als Trainingsdaten für das Modell beziehungsweis Modellierungsmodell erstellt werden können. So kann das Modellierungsmodell anhand des Trainings mittels der Trainingsdaten, welche auf Schichtdaten beispielsweise des Modellbauteils 26 beruhen, Vorhersagen über die Bauteilqualität des Bauteils 10 treffen. Dazu erhält das trainierte Modellierungsmodell ein dreidimensionales Modell des Bauteils 10 als Eingabe.

Vorteilhaft können die Schichtdaten der jeweiligen Schicht 12 beim Herstellen des Modellbauteils 26 und/oder des Bauteils 10 aus Messdaten, welche eine Sensoreinrichtung 28 für die jeweilige Schicht 12 aufzeichnet, gebildet werden. Zusätzlich oder alternativ können die Schichtdaten durch eine Simulation berechnet beziehungsweise simuliert werden.

Messdaten, die bei dem Verfahren verwendet werden, können vorteilhafterweise eine Intensitätsverteilung einer Schmelzbadüberwachung (Melt Pool Monitoring, MPM) und/oder Langzeitbelichtungsaufnahmen für eine optische Tomographie sein.

Anhand des Datensatzes, welcher insbesondere die gemessenen oder simulierten Schichtdaten umfasst, kann die Bauteilqualität abgeschätzt werden, indem beispielsweise eine Bewertung einer Relevanz kritischer Regionen, die in den Sensor und/oder Simulationsdaten beziehungsweise Schichtdaten enthalten ist, erfolgt. Dabei erfolgt die Bewertung indem eine konfigurierbare Anzahl von aufeinanderfolgenden Schichten 12 beziehungsweise deren Schichtdaten kombiniert wird. Hierfür können die Messwerte beziehungsweise Messdaten und/oder Kritikalitäten von typischerweise weniger als 10 Lagen oder Schichten 12 bevorzugt 3 bis 5 Einzellagen beziehungsweise Schichten 12 kombiniert werden. Bei dieser Kombination kann eine arithmetische Operation, wie beispielsweise eine Mittelwertbildung der Messwerte der einzelnen Schichten 12 beziehungsweise der Einzellagenmesswerte, aber auch eine logische Verknüpfung von Einzellagenkritikalitätsindizes durchgeführt werden. So können die Schichtdaten der jeweiligen Schicht 12 eine Kritikalität beschreiben. Die Kritikalitäten können beispielsweise durch eine zweidimensionale Verteilung, insbesondere in Form eines Bitmaps mit einer konfigurierbaren Auflistung dargestellt werden, sodass für jede Schicht 12 die entsprechenden Schichtdaten als diese Bitmap vorliegen. So kann jeder Pixel der Kritikalität an einem Punkt in einem 2D-Gebiet (typischerweise laterale Abmessungen des Bauteils 10) entsprechen.

Bevorzugt wird eine Mehrlagenkritikalität aus dem Mittelwert der einzelnen Lagenmesswerte gebildet. So kann sich eine Mehrlagenkritikalitätsbitmap beispielsweise anhand eines Schwellenwertvergleichs einer Mittelwertverteilung ergeben beziehungsweise gebildet werden. Werden die Einzellagenkritikalitäten als Eingangsdaten genutzt, kann beispielsweise eine Zählung der Einzellagenkritikalitäten genutzt werden. Beispielsweise wird ein Wert in der räumlichen Mehrlagenkritikalitätsverteilung auf Eins gesetzt, falls mindestens zwei der betrachteten Einzellagenkritikalitäten als kritisch gesetzt sind.

Um nun anhand von Anomalien, welche beispielsweise aufgrund zu hoher Schmelztemperatur durch eines Belichtungsvektors 22, die Bauteilqualität abschätzen zu können, erfolgt eine Identifikation kritischer - gegebenenfalls zu korrigierender - Belichtungsvektoren 22. So kann beispielsweise ein Überlappen der Belichtungsvektoren 22 einer Schicht 12 beziehungsweise Lage mit den kritischen Regionen bestimmt werden. Dabei kann für die Identifikation kritischer Regionen eine Kontursuche mit optionaler Größenfilterung erfolgen.

Insgesamt können für eine Detektion einer mehrlagigen kritischen Region mehrere Fälle zu unterscheiden sein beziehungsweise unterschieden werden:

Im ersten Fall kann eine Detektion mehrlagenkritischer Regionen aus Punktdaten erfolgen.

Ausgehend von Datenpunkten die entlang der Belichtungsvektoren 22 verteilt sind, beispielsweise anhand von MPM-Intensitätswerten oder simulierten Temperaturen, werden Einzellagenkritikalitätsbitmaps erstellt, indem Pixelwerte einer Bitmap entsprechend den zugehörigen Messwerten gesetzt werden. Dabei können sowohl Rohwerte der Messdaten direkt genutzt werden, als auch Kritikalitätsindizes, beispielsweise unterkritisch, semikritisch oder kritisch, bestimmt werden, welche somit als logische Daten verwendet werden können, die über einen Schwellwertvergleich aus den Rohrdaten generiert werden.

Bei der Bitmaperzeugung sollte berücksichtigt werden, dass keine undefinierten Pixel innerhalb belichteter Flächen (insbesondere pro Schicht 12) verbleiben, da sonst bei einer folgenden Verknüpfung der Einzellagenbitmaps löchrige Flächen entstehen können. Dies kann beispielsweise durch eine hinreichend niedrige Bitmapauflösung und somit durch größere Pixel oder einem Bitmap-Dilatationsprozess, mit beispielsweise einem morphologischen Close, erreicht werden. Die Mehrlagenkritikalitätsbitmap wird dann anhand einer arithmetischen oder logischen Verknüpfung aus den Einzellagenbitmaps gebildet, eine anschließende Kontursuche, welche beispielsweise eine Länge beziehungsweise Umrundung einer Fläche beschreibt, und eine optionale Größenfilterung können dann in den mehrlagigen Daten betreffend mehrere Schichten kritische Regionen beziehungsweise Anomalien beschreiben.

Im zweiten Fall erfolgt eine Detektion mehrlagenkritischer Vektoren aus Punktdaten.

Dabei werden mehrlagenkritische Regionen analog zum ersten Fall bestimmt, wobei die Kontursuche jedoch nicht erforderlich ist. Anschließend wird für die Belichtungsvektoren 22 für eine Lage beziehungsweise Schicht 12 der Überlapp mit den kritischen Regionen berechnet und die Belichtungsvektoren 22 für den Fall einer Überlappschwellenwertüberschreitung als kritisch markiert. Aufgrund von Performancegründen kann die Berechnung des Überlapps mittels einer elektronischen Recheneinrichtung durch Zählung von kritischen, äquidistanten Samplingpunkten auf den Vektoren beziehungsweise Belichtungsvektoren 22 erfolgen. Zusätzlich oder alternativ ist aber auch die Bestimmung der Länge eines Vektorpolygonüberlapps möglich, wenn die kritischen Regionen zuvor durch eine Kontursuche bestimmt werden.

So kann das Durchführen des Verfahrens gemäß dem ersten Fall die Regionen ermitteln und gemäß dem zweiten Fall beispielsweise die Frage beantworten, wie lange der entsprechende Belichtungsvektor 22 auf kritischen Punkten läuft, und dadurch beispielsweise ermittelt werden, ob der Vektor selbst kritisch ist.

Zusätzlich oder alternativ kann gemäß einem dritten Fall eine Detektion mehrlagenkritischer Vektoren aus Vektor-Kritikalitäten erfolgen.

Dabei können als Eingangsdaten in diesem Fall Einzellagenvektorkritikalitätsindizes (beispielsweise unkritisch und kritisch) verwendet werden.

Pixelwerte der Einzellagen-Bitmaps werden entlang des Vektors beziehungsweise Belichtungsvektors entsprechend gesetzt.

Nach einem optionalen Dilatationsschritt werden die Bitmaps analog und/oder logisch zu einer mehrlagigen Kritikalitätsbitmap kombiniert und anschließend, wie im zweiten Fall, die Überlappung in dem Belichtungsvektor einer Lage bestimmt. Die Vektor-Mehrlagen-Kritikalität ergibt sich analog zum Fall 2 durch Schwellenwertvergleich der Überlappungen.

Bei den beschriebenen Fällen werden die entsprechenden Schichtdaten beziehungsweise die dazu korrespondierenden Einzelmehrlagenbitmaps als der Datensatz verwendet, in dessen Abhängigkeit somit die Bauteilqualität ermittelt werden kann, da durch die genannten Datensätze beispielsweise kritische Regionen oder Vektoren bestimmt werden können.

Für die Bewertung der Relevanz einer kritischen Region oder für die Identifikation kritischer Vektoren von Messsimulationsdaten oder Daten einer simulierten Messung (beispielsweise der Temperatur) werden mehrere aufeinanderfolgende Schichten 12 genutzt. Damit lassen sich insbesondere Überhitzungen die zu Aufwölbungen der Oberfläche beziehungsweise Schmelzperlen des Bauteils 10 führen, besonders zuverlässig detektieren, insbesondere zuverlässiger als dies bei einer getrennten Bewertung der Daten einzelner Schichten möglich ist. So ist das vorgestellte Verfahren besonders vorteilhaft zum Ermitteln der Bauteilqualität geeignet.

Zusätzlich oder alternativ kann das Modellierungsmodell verwendet werden, welches insbesondere durch oder mittels einer Methode des maschinellen Lernens bereitgestellt wird. Dabei kann für das Modellbauteil 26 ein Bauteilmodell 30 verwendet werden, wessen Geometrie beziehungsweise Form für eine Variation der bei der Herstellung des Bauteilmodells 26 verwendbaren Belichtungsvektoren 22 sorgen kann, sodass unterschiedliche Eigenschaften bei mehreren Belichtungsvektoren 22 für das Modellbauteil 26 vorliegen.

Das Modellbauteil 26 beziehungsweise das Bauteilmodell 30 dient insbesondere als Referenzbauteil und ist aufgrund seiner Form so konzipiert, dass Merkmalswerte für den Algorithmus des maschinellen Lernens und/oder das neuronale Netz möglichst gleichmäßig verteilt sind. So kann zunächst eine für den Algorithmus des maschinellen Lernens verwendete Merkmalsliste beschrieben werden. Das Modellbauteil 26 kann, beispielsweise mittels Kopien seiner selbst, insbesondere für die Trainingsdaten bauraumfüllend hergestellt werden.

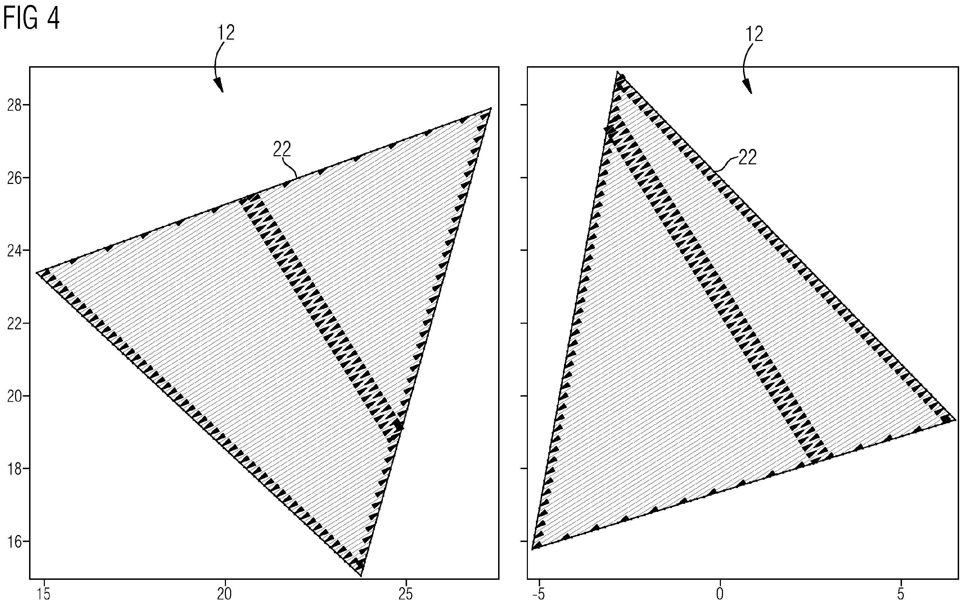

Jede der Schichten 12 des Modellbauteils 26 wird durch einen Belichtungsvektor oder einen Satz Belichtungsvektoren 22 hergestellt. FIG 4 zeigt beispielsweise die Belichtungsvektoren 22 zweier Schichten 12. Die Merkmale beziehungsweise Eigenschaften der Belichtungsvektoren 22 sollten vorteilhaft insbesondere zwischen den Schichten 12 variieren.

Dabei kann eine erste der zu variierenden Eigenschaften eine Position auf einer Bauplatte 32 welche den Boden des Pulverbetts 14 bildet beschreiben. Dabei kann die Bauplatte 32 beispielsweise mit einem xy-Koordinatensystem belegt werden und eine Eigenschaft des jeweiligen Belichtungsvektors 22 eine Position oder Pfad auf der Bauplatte 32 darstellen, wobei die Mitte des Belichtungsvektors 22 oder alternativ Koordinaten des Vektoranfangs und Endes verwendet werden können, um die Eigenschaft "Position" zu beschreiben. Bei einer runden Bauplatte 32 können Position anstatt mit xy-Koordinaten beispielsweise in Polarkoordinaten verwendet werden.

Eine zweite Eigenschaft kann die Vektorlänge beziehungsweise alternativ eine Vektorzeit oder eine minimale oder maximale Wiederholungszeit sein. Die Vektorzeit ist dabei die Zeit, die benötigt wird, um einen Belichtungsvektor 22 freizulegen. Die minimale Wiederholungszeit ist die Zeit zwischen dem Vektorstart und der vorherigen Belichtungszeit des dem Vektorstrahls am nächsten liegenden Punktes. Die maximale Wiederholungszeit kann die Zeit zwischen dem Vektorende und der vorherigen Expositionszeit des Punktes der dem Vektorende am nächsten liegt darstellen.

Eine dritte Eigenschaft kann das minimale Masseintegral, alternativ ein maximales oder durchschnittliches Masseintegral oder eine durchschnittliche Vektortemperatur, die insbesondere durch Simulation und mittels eines halbanalytischen Ansatzes bestimmt werden können, sein. Das Masseintegral kann bestimmen, wieviel von einer Halbkugel oder Ellipse mit einem bestimmten Radius, typischerweise ca. 1 mm, in dem schon belichteten Bauteil eingeschlossen ist. Um das minimale Masseintegral zu ermitteln, kann beispielsweise ein Belichtungsvektor 22 in Prüfpunkten mit einem regelmäßigen Abstand von typischerweise 0,1 mm abgetastet werden. Für diese Stichproben werden jeweils die Integrale ausgewertet und ihr Minimum berechnet.

Eine weitere Eigenschaft könnte eine Vektororientierung beziehungsweise alternativ eine Streifenorientierung darstellen. Dabei ist die Vektororientierung der Winkel zwischen einem Expositions- oder Belichtungsvektor 22 und der Abszisse. Die Streifenorientierung kann die Richtung einer Belichtungsvektorfolge darstellen.

Des Weiteren gibt es weitere Merkmale, wie beispielsweise Prozessparameter, beispielsweise eine Laserleistung, eine Lasergeschwindigkeit oder einen Schraffurabstand. Insbesondere können optional Merkmale verwendet werden, wenn verschiedene Prozessparametersätze ausgewertet und/oder kombiniert werden müssen.

Prozessparametersätze können beispielsweise durch die Sensoreinrichtung 28 aufgezeichneten Messdaten umfassen.

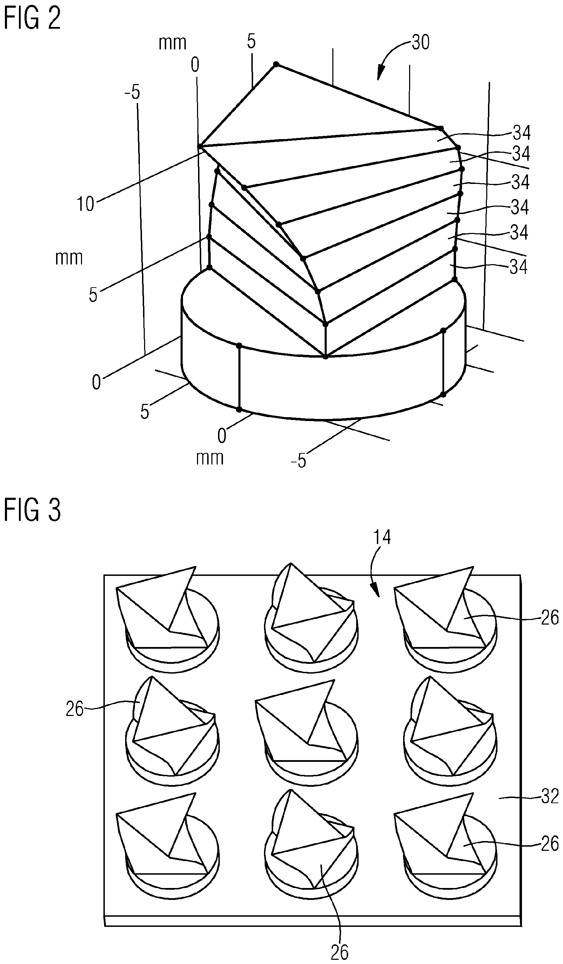

FIG 2 zeigt ein Modellbauteil 26 beziehungsweise das dem Modellbauteil 26 zugrundeliegende dreidimensionale Bauteilmodell 30, welches eine besondere Variation in den soeben skizzierten Eigenschaften der zu seiner Fertigung verwendbaren Belichtungsvektoren 22 aufgrund seiner vorteilhaften Geometrie aufweisen kann.

Das Bauteilmodell 30 der FIG 2 weist somit eine vorteilhafte Geometrie für das Machine Learning Training auf, dafür ist es entlang seiner Höhe in sieben Abschnitte 34 unterteilt. Dabei ist die Anzahl der Abschnitte 34 willkürlich und nur beispielhaft. So kann das daraus herzustellende Modellbauteil 26 mit mehr oder weniger Abschnitten 34 hergestellt werden.

Die Höhe jedes Abschnitts 34 ist insbesondere gleich einer Schichtdicke einer jeweiligen durch die Vorrichtung 16 herzustellenden Schicht 12 multipliziert mit der Anzahl der verschiedenen Schichtausrichtungen, welche untersucht beziehungsweise für die Schichtdaten verwendet werden sollen.

$$h_{sect} = h_{layer} \cdot n_{orient}$$

Dabei kann die Reihenfolge der Streifenausrichtungen in jedem Abschnitt 34 identisch sein. Diese Reihenfolge kann so gewählt werden, dass die Orientierungen innerhalb der Abschnitte 34 gleichmäßig verteilt sind. Eine praktische Wahl der Anzahl verschiedener Lagen und Orientierungen kann beispielsweise sein $n_{orient}=36$ oder $n_{orient}=72$ oder eine andere ausreichende Größe ($\geq 18$) ganzzahliger Teiler von 360. Die Reihenfolge der Streifenorientierung in jedem Abschnitt kann wie folgt konstruiert werden:

$$\alpha_{st}, \alpha_{st} + 60°, \alpha_{st} + 2 \cdot 60°, \cdots, \alpha_{st} + 5 \cdot 60°,$$
$$\alpha_{st} + \Delta_{st}, \alpha_{st} + \Delta_{st} + 60°, \alpha_{st} + \Delta_{st} + 2 \cdot 60°, \cdots, \alpha_{st} + \Delta_{st} + 5 \cdot 60°,$$
$$\alpha_{st} + 2 \cdot \Delta_{st}, \alpha_{st} + 2 \cdot \Delta_{st} + 60°, \alpha_{st} + 2 \cdot \Delta_{st} + 2 \cdot 60°, \cdots, \alpha_{st} + 2 \cdot \Delta_{st} + 5 \cdot 60°,$$
$$\cdots,$$
$$\alpha_{st} + n_{end} \cdot \Delta_{st}, \alpha_{st} + n_{end} \cdot \Delta_{st} + 60°, \alpha_{st} + n_{end} \cdot \Delta_{st} + 2 \cdot 60°, \cdots, \alpha_{st} + n_{end} \cdot \Delta_{st} + 5 \cdot 60°,$$
$$\Delta_{st} = \frac{360°}{n_{orient}}, n_{end} = \frac{60°}{\Delta_{st}} - 1$$

Alternativ kann auch eine andere regelmäßige Verteilung der Orientierungswinkel verwendet werden. Eine Bedingung der Verteilung sollte sein, dass sich zwei aufeinanderfolgende Schichten 12 ausreichend in der Orientierung unterscheiden und dabei insbesondere beispielsweise um mehr als 45° zueinander verschoben beziehungsweise verdreht sind.

Für die Trainingsgeometrien des Modellbauteils 26 für die Trainingsdaten kann insbesondere das gleiche Schraffurmuster, welches bei dem Bauteil 10 verwendet werden soll, verwendet werden. Dabei werden in der Regel je nach Bauteilgröße beispielsweise Streifen von 5 bis 10 mm Breite oder Schachbrettmuster ähnlicher Größe verwendet. Im Beispiel der FIG 2 bis 4 kann beispielsweise ein Streifenmuster von 10 mm Breite verwendet werden.

Der untere Abschnitt 34 der Geometrie des Bauteilmodells 30 kann als Zylinder ausgeführt sein. Vorteilhafterweise kann der Zylinder beispielsweise ein Durchmesser von 12 bis 16 mm aufweisen. Zu große Zylinderbasen führen zu langen Belichtungsvektoren 22 und dazu, dass zu viele Streifen in ähnlicher Größe erzeugt werden.

Umgekehrt werden bei zu kleinen Zylindern keine langen Belichtungsvektoren 22 im Training abgedeckt. Das Ziel der vorteilhaften Geometrie des Bauteilmodells 30 ist es, die genannten Merkmale beziehungsweise Eigenschaften möglichst gleichverteilt in den Schichten 12 und in der gesamten Geometrie abzudecken.

In dem in FIG 2 dargestellten Beispiel beträgt der Durchmesser des Zylinders beispielsweise 15 mm.

Der zweite Abschnitt 34 also der erste oberhalb des Zylinders und die darauffolgenden Abschnitte 34 sind insbesondere aus zueinander verdrehten Dreiecksprismen gebildet. Die Basis eines jeden Dreiecksprismas ist ein regelmäßiges Dreieck, das in dem unteren Kreis (Umfang des Zylinders) eingeschrieben ist. Alternativ können auch andere regelmäßige Vielecke oder andere Formen anstelle des Dreiecks verwendet werden, solange eine breite Streuung der Längen der Belichtungsvektoren 22 erreicht wird. Das Dreieck muss nicht exakt in den Kreis eingeschrieben werden. Auch etwas kleinere Dreiecke sind hier geeignet.

Jeder Abschnitt umfasst somit verdrehten Prismen beziehungsweise Dreiecksprismen, die in absteigender Reihenfolge der Verdrehungswinkel übereinandergestapelt werden. Die Verdrehungen gewährleisten, dass das Merkmal des minimalen Massenintegrals in den Trainingsdaten gleichmäßig abgedeckt werden kann. Beispielsweise können bei Nickelbasislegierungen Überhangswinkel bis zu 40° ohne Überhitzung hergestellt werden. Daher werden die Verdrehungswinkel der oberen sechs Abschnitte 34 in FIG 2 wie folgt gewählt: 90, 80, 70, ..., bis 40°.

Für die Einstellung von Prozessparametern oder Materialien, die weniger zur Überhitzung neigen, können Profile mit noch geringeren Mindestüberhangswinkeln verwendet werden.

Wie bereits erwähnt, ist die Anzahl der Abschnitte 34 willkürlich. Es können auch andere absteigende Sequenzen bis zu 40° verwendet werden.

Die Reihenfolge der Verdrillungswinkel ist absteigend, weil im Falle einer Überhitzung nur die oberen Abschnitte 34 betroffen sind und daher leicht aus dem Trainingsdatensatz ausgeschlossen werden können. Im Allgemeinen benötigen die Materialien, die zur Überhitzung neigen, weniger Abschnitte 34 verdrehter Prismen (der obere Abschnitt 34 hat einen größeren Verdrehungswinkel).

Alternativ kann anstelle von Abschnitten 34 auch eine kontinuierliche Funktion verwendet werden die Verdrehungswinkel darstellt.

FIG 3 zeigt eine Verteilung mehrerer Modellbauteile 26 auf der Bauplatte 32, wobei eine Möglichkeit für die vorteilhafte Verteilung darin besteht, jedes zweite Bauteilmodell 30 zusätzlich um seinen Mittelpunkt zu drehen, das heißt benachbarte Geometrien haben unterschiedliche Ausrichtungen. Im Falle von Dreiecken kann eine Drehung von 60° vorteilhaft sein.

FIG 3 zeigt die Drehung von neun benachbarten Modellbauteilen 26, dabei können auch mehr als zwei verschiedene Drehungen beziehungsweise Orientierungen verwendet werden, um eine günstige Verteilung über die Bauplatte 32 zu erreichen.

Abbildung 4 zeigt ein Beispiel für ein Streifmuster in zwei benachbarten Teilen mit einer 60° Drehung, wobei die Linien die Belichtungsvektoren 22 repräsentieren. Eine Drehung von 60° dient der besseren Verteilung der Vektormengenmerkmale.

Die Modellbauteile 26 werden möglichst gleichmäßig verteilt, insbesondere derart, dass eine möglichst große Fläche auf der Bauplatte 32 mit den Modellbauteilen 26 bedeckt wird und somit ein besonders geringer Abstand zwischen den benachbarten Modellbauteilen 26 eingehalten werden kann.

Der typische geringe Abstand zwischen den Teilen bei einem pulverbettbasiertem Schmelzverfahren kann zwischen 5 und 15 mm betragen.

Darüber hinaus sollten die Kanten und Ecken einer rechteckigen Bauplatte 32 nach Möglichkeit abgedeckt werden. Einige Ecken können beispielsweise jedoch nicht immer abgedeckt werden, wenn Befestigungselemente der Bauplatte 32 in der Nahe liegen.

Bei einer runden Bauplatte 32 wird empfohlen eine Umgebung der Plattengrenze so nah wie möglich abzudecken, um vorteilhafte Trainingsdaten zu erhalten.

Für die Trainingsdaten kann es besonders vorteilhaft sein, mehrmals das Modellbauteil 26 in insbesondere unterschiedlichen Orientierungen und bauraumfüllend herzustellen.

Je nach Füllung der Bauplatte 32 können für die Trainingsdaten dabei Bereiche zu extrapolieren sein, an denen in dem Bauraum beziehungsweise Pulverbett 14 kein Modellbauteil 26 gebildet wird. Aufgrund der obligatorischen Zwischenräume zwischen den Modellbauteilen 26 wird es immer einige unbedeckte xy-Position geben. Wenn dabei die anhand der Messungen gesammelten Daten nicht gut genug interpretiert werden können, kann die Bauplatte 32 erneut mit Modellbauteilen 26 befüllt werden, welche in den zuvor liegenden Lücken gebaut werden, um für die Trainingsdaten für jede xy-Position ausgleichen zu können.

Für mehrere Prozessparameter, wie Laserleistung, Lasergeschwindigkeit und/oder Schraffurabstand untersucht werden sollen, sollte der Bau beziehungsweise das Herstellen mit anderen Parametersätzen wiederholt werden. Im Gegensatz dazu können Downskin/Upskin-Parameter und die entsprechenden Belichtungsstrategien in denselben Build beziehungsweise das Herstellen integriert werden.

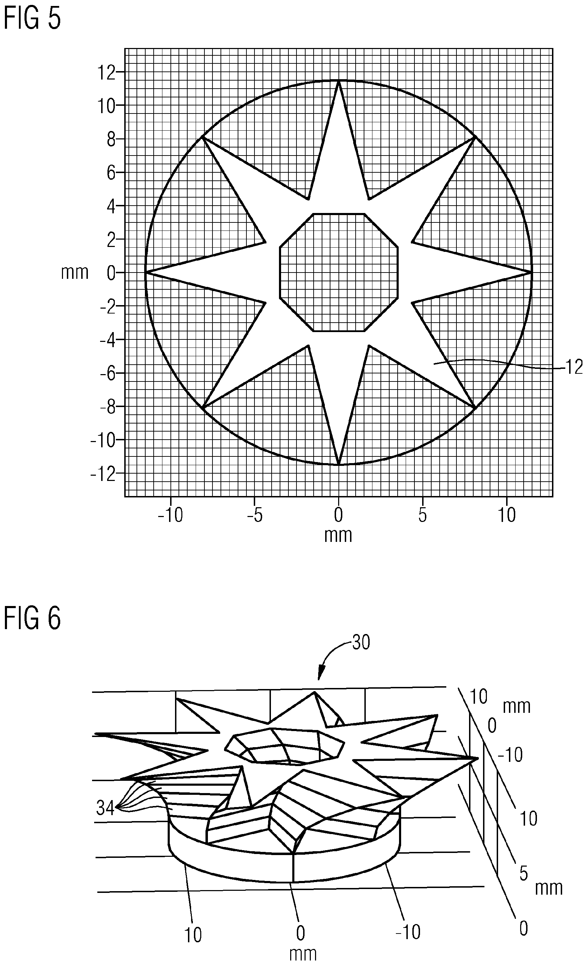

Die FIG 5 und 6 zeigen eine weitere vorteilhafte Geometrie eins Bauteilmodells 30, wobei die FIG 5 insbesondere eine Schicht 12, welche mittels eines Skalierungsfaktors in mehreren Etagen beziehungsweise Schichten 12 des Bauteilmodells 30 verwendet wird.

Die Form beziehungsweise Geometrie des Ausführungsbeispiels des Modellbauteils 26 der FIG 5 und 6 kann insbesondere nützlich sein, um eine Korrektheit der Vorhersage des Algorithmus des maschinellen Lernens, welche beispielsweise das Modellierungsmodell zugrunde liegt, zu bestimmen.

Das Bauteilmodell 30 ist in ähnlicher Weise wie das der FIG 2 bis 4 aufgebaut, jedoch besteht ein Unterschied darin, dass der untere Zylinder mit einem größeren Durchmesser, beispielsweise 23 mm ausgeformt ist, um die sternförmige Struktur zu erreichen. Alternativ kann der Zylinder weggelassen werden, und der untere Teil beginnt direkt mit einem sternförmigen Abschnitt 34, von welchem FIG 5 eine Schicht 12 zeigt.

Die sternförmigen Abschnitte können analog den Dreiecksprismen der FIG 2 bis 4 verdreht werden. Darüber hinaus kann ein Skalierungsfaktor von unten nach oben angewendet werden. Der Skalierungsfaktor beziehungsweise Wachstumskalierungsfaktor kann in jedem Abschnitt 34 demselben Winkel entsprechen, der für die Verdrehung gewählt wurde, das heißt, mathematisch kann dieser Faktor wie folgt berechnet werden:

$$f_{growth} = 1 + \frac{h_{sect}}{r_{star}\tan(\alpha_{twist})}$$

Alternativ kann der Skalierungsfaktor auch beispielsweise $\boldsymbol{f_{growth}}$ = 1 betragen. Oder es können nur große Skalierungsfaktoren ohne Drehung verwendet werden, sodass das Bauteil einfach eine gerade sternförmige Geometrie aufweist.

Als Grundgeometrie beziehungsweise Form im unteren Zylinder kann ein eingekreistes Achteck gewählt werden, welches die FIG 5 und 6 zeigen. Dabei hätte alternativ ein anderes eckiges Polygon gewählt werden können.

Das Polygon beziehungsweise Achteck bildet ein Loch in der Mitte, welche einen Bereich der jeweiligen Schicht 12 darstellt, der für die Beurteilung der Bauteilqualität in der Regel von untergeordneter Relevanz ist. Insbesondere dient das Loch dazu, um Material zu sparen.

Da die anhand der Schmelzbadüberwachung gewonnen Information aus der Mitte der Struktur nicht wesentlich sind, dient das Modellbauteil 26 dazu die Kanten und dort auftretenden Anomalien im Außenbereich zu erfassen. In einer anderen Variante des Modellbauteils 26 kann nur ein oder weniges Strahlen der Sternform hergestellt werden, um ebenfalls Material beziehungsweise Werkstoff, insbesondere in Form des Pulvers 24, zu sparen.

Die Anzahl der Abschnitte kann ebenfalls bei dieser Form des Bauteilmodells 30 willkürlich gewählt werden. Das Ausführungsbeispiel der FIG 5 und 6 weist fünf 5 Abschnitte 34 mit verdrillter Sternform und Wachstumsskalierungsfaktor auf.

Im Gegensatz zu der Ausführungsform des Modellbauteils 26 gemäß FIG 2 bis 4 sind die Winkel für die Verdrehung aggressiver gewählt.

Die Verdrehungswinkel an der Spitze der Struktur sind somit insbesondere kleiner als 40°. Für das Material beziehungsweise Werkstoff kann eine Nickelbasislegierung verwendet werden, wofür die folgenden Verdrehungswinkel gewählt werden können, 80°, 60°, 45°, 35°, 25°.

Die resultierende Geometrie dient als gute Kontrolle für die Ausgabe des Algorithmus des maschinellen Lernens und/oder des neuronalen Netzes, also des Modellierungsmodells, da sowohl (untere) Abschnitte 34 enthalten sind, die ohne Anomalie gebaut werden können aber insbesondere auch (obere) Abschnitt 34, bei welcher Überhitzungsanomalien auftreten können.

Auch hier kann es praktisch sein können, mehrere Modellbauteile 26 verteilt über die Bauplatte 32 zu drucken. Die Regel für die Abdeckung der Bauplatte 32 können dabei weniger streng sein, als in einer Trainingsphase bei welcher das Modelbauteil 26 und Bauteilmodell 30 gemäß FIG 2 bis 4 verwendet wird. So können die Modelbauteile 26 quasi beliebig auf der Bauplatte 32 platziert werden.

Somit ist hier die Bestimmung der Bauteilqualität anhand des Verfahrens gezeigt, wenn das Modellierungsmodell zum Einsatz kommt. Durch das vorgestellte Verfahren kann auf vorteilhafte Weise die Bauteilqualität anhand wenigstens eines Datensatzes, welcher Schichtdaten umfasst, also auch anhand eines Modellierungsmodells, das ebenfalls Schichtdaten umfasst, ermittelt werden. Somit können beispielsweise auf vorteilhafter Weise einer fehlerhaften Herstellung des Bauteils 10 vermieden werden.

So dient das Verfahren sowohl zur mehrschichtigen Kritikalitätsbewertung für die Qualitätssicherung von LPBF-Prozessen als auch zum Entwurf von Referenzmodellen für die Erkennung von Anomalien mit In-situ-Überwachung in Laser-Pulverbett-Fusionsprozessen.

Bezugszeichenliste

| | |
|---|---|
| 10 | Bauteil |
| 12 | Schicht |
| 14 | Pulverbett |
| 16 | Vorrichtung |
| 18 | Lichtquelle |
| 20 | Laserstrahl |
| 22 | Belichtungsvektor |
| 24 | Pulver |
| 26 | Modellbauteil |
| 28 | Sensoreinrichtung |
| 30 | Bauteilmodell |
| 32 | Bauteilplatte |
| 34 | Abschnitt |

**Patentansprüche**

1. Verfahren zum Ermitteln einer Bauteilqualität eines durch pulverbettbasiertes Schmelzen herzustellenden Bauteils (10), welches aus mehreren aufeinanderfolgenden Schichten (12) gebildet wird, in Abhängigkeit von wenigstens einem Datensatz und/oder in Abhängigkeit von einem Modellierungsmodell, welche anhand von Schichtdaten einer jeweiligen Schicht (12) zumindest eines Teils der aufeinanderfolgenden Schichten (12) des Bauteils (10) und/oder eines Modellbauteils (26) gebildet werden.

2. Verfahren nach Anspruch 1, **dadurch gekennzeichnet, dass** für die Schichtdaten der jeweiligen Schicht (12) beim Herstellen des Modellbauteils (26) mittels einer Sensoreinrichtung (28) für die jeweilige Schicht (12) Messdaten aufgezeichnet werden und/oder die Schichtdaten durch eine Simulation berechnet werden.

3. Verfahren nach Anspruch 2, **dadurch gekennzeichnet, dass** für das Modellbauteil (26) ein Bauteilmodell (30) verwendet wird, dessen Form für mehrere Belichtungsvektoren (22), welche bei der Herstellung des Modellbauteils (26) verwendet werden, unterschiedliche Eigenschaften vorgibt, sodass eine Variation der Eigenschaften bei den mehreren Belichtungsvektoren (22) vorliegt.

4. Verfahren nach Anspruch 3, **dadurch gekennzeichnet, dass** die beim Herstellen des Modellbauteils (26) erfassten Messdaten sowie das Bauteilmodell (30) als Trainingsdaten und/oder als Validierungsdaten für eine Methode des maschinellen Lerners, welche das Modellierungsmodell bereitgestellt, verwendet werden.

5. Verfahren nach einem der Ansprüche 2 bis 4, **dadurch gekennzeichnet, dass** als die Messdaten eine Intensitätsverteilung einer Schmelzbadüberwachung und/oder Langzeitbelichtungsaufnahmen für eine optische Tomografie verwendet werden.

6. Verfahren nach einem der vorhergehenden Ansprüche, **dadurch gekennzeichnet, dass** die Schichtdaten eine Kritikalität beschreiben.

7. Verfahren nach einem der vorhergehenden Ansprüche, **dadurch gekennzeichnet, dass** für die Schichtdaten mehrere, insbesondere bis zu 10 und bevorzugt 3-5, Schichten (12) arithmetisch und/oder logisch zusammengefasst werden und daraus wenigstens eine Anomalie für das Bauteil (10) abgeleitet wird, welche die Bauteilqualität beschreibt.

8. Verfahren nach einem der vorhergehenden Ansprüche, **dadurch gekennzeichnet, dass** aus den Schichtdaten kritische Regionen anhand von Punktdaten und/oder ein kritischer Vektor anhand von Punktdaten und/oder ein kritischer Vektor anhand einer Vektorkritikalität gebildet werden und die Bauteilqualität daraus abgeleitet wird.

9. Verfahren nach einem der Ansprüche 2 bis 8, **dadurch gekennzeichnet, dass** für die Trainingsdaten das Modellbauteil (26) mehrmals in insbesondere unterschiedlicher Orientierung bauraumfüllend hergestellt wird.

**10.** Verfahren nach einem Ansprüche 3 bis 9, **dadurch gekennzeichnet, dass** Bauteilmodell Skalierungsfaktoren verwendet.

FIG 1

FIG 2

FIG 3

FIG 4

EP 4 563 268 A1

FIG 5

FIG 6

Europäisches Patentamt

European Patent Office

Office européen des brevets

**Nummer der Anmeldung**

EP 23 21 3398

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 144 463 A1 (GEN ELECTRIC [US]) 8. März 2023 (2023-03-08) | 1,2,5,6, 8,10 | INV. B22F10/28 |
| Y | * Absätze [0011] - [0013], [0074], [0080], [0082], [0092] - [0099], [0103], [0173], [0118], [0122], [0127], [0049], [0093]; Ansprüche; Abbildungen * | 3-5,7,9 | B22F10/38 B22F10/85 B29C64/153 B29C64/393 B33Y50/02 G06N20/00 |
| Y | ----- US 2019/248078 A1 (DOMRÖSE ROBERT ACHIM [DE] ET AL) 15. August 2019 (2019-08-15) * Absätze [0041] - [0042] * | 5,7 | G05B19/18 |
| Y | ----- WO 2021/197762 A1 (SLM SOLUTIONS GROUP AG [DE]) 7. Oktober 2021 (2021-10-07) * Seite 4, letzter Absatz - Seite 5, Absatz 1; Abbildung 5 * | 3,4,9 | |
| A | ----- WO 2022/186847 A1 (BAKER HUGHES OILFIELD OPERATIONS LLC [US]) 9. September 2022 (2022-09-09) * das ganze Dokument * ----- | 1-10 | |

**RECHERCHIERTE SACHGEBIETE (IPC)**

B22F
G06N
G05B
B29C
B33Y

Der vorliegende Recherchenbericht wurde für alle Patentansprüche erstellt

| Recherchenort | Abschlußdatum der Recherche | Prüfer |
|---|---|---|
| Den Haag | 16. Mai 2024 | Ceulemans, Judy |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 21 3398

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-05-2024

| Im Recherchenbericht angeführtes Patentdokument | | Datum der Veröffentlichung | Mitglied(er) der Patentfamilie | | Datum der Veröffentlichung |
|---|---|---|---|---|---|
| EP 4144463 | A1 | 08-03-2023 | EP | 4144463 A1 | 08-03-2023 |
| | | | US | 2023062971 A1 | 02-03-2023 |
| US 2019248078 | A1 | 15-08-2019 | CN | 109643099 A | 16-04-2019 |
| | | | DE | 102016213609 A1 | 25-01-2018 |
| | | | EP | 3488305 A1 | 29-05-2019 |
| | | | US | 2019248078 A1 | 15-08-2019 |
| | | | WO | 2018019567 A1 | 01-02-2018 |
| WO 2021197762 | A1 | 07-10-2021 | CN | 115461175 A | 09-12-2022 |
| | | | EP | 4126423 A1 | 08-02-2023 |
| | | | JP | 2023519437 A | 10-05-2023 |
| | | | US | 2023141266 A1 | 11-05-2023 |
| | | | WO | 2021197762 A1 | 07-10-2021 |
| WO 2022186847 | A1 | 09-09-2022 | CA | 3209921 A1 | 09-09-2022 |
| | | | CN | 116887942 A | 13-10-2023 |
| | | | EP | 4301544 A1 | 10-01-2024 |
| | | | WO | 2022186847 A1 | 09-09-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GOH, G.D.** ; **SING, S.L.** ; **YEONG, W.Y.** A review on machine learning in 3D printing: applications, potential, and challenges. *Artif Intell Rev*, 2021, vol. 54, 63-94

- **FELIX, S.** ; **RAY MAJUMDER, S.** ; **MATHEWS, H.K. et al.** In situ process quality monitoring and defect detection for direct metal laser melting. *Sci Rep*, 2022, vol. 12, 8503